# EUROPÄISCHE PATENTSCHRIFT

(11) **EP 3 405 272 B1**
(45) Veröffentlichungstag und Bekanntmachung des Hinweises auf die Patenterteilung: **31.08.2022**
(21) Anmeldenummer: 17701789.4
(22) Anmeldetag: 19.01.2017
(51) Int. Cl.: B01D 11/02, C11B 1/10, A23L 27/10, A23L 33/105, A23L 33/15, C11B 1/04, C11B 9/02

(54) **VERFAHREN ZUR GEWINNUNG VON WERTBESTIMMENDEN INHALTSSTOFFEN AUS KRÄUTERN ODER GEWÜRZEN**
METHOD FOR OBTAINING VALUE-DETERMINING CONTENTS FROM HERBS OR SPICES
PROCÉDÉ DE PRODUCTION D'INGREDIENTS VALORISANTS À PARTIR DES HERBES OU DES ÉPICES

(30) Priorität: 19.01.2016 CH 692016
(43) Veröffentlichungstag der Anmeldung: 28.11.2018
(73) Patentinhaber: Unico-first AG, 9000 St. Gallen (CH); Zhaw - Zürcher Hochschule für angewandte Wissenschaften, 8820 Wädenswil (CH)
(72) Erfinder: LAUX, Roland, 9325 Roggwil (CH); HÜHN, Tilo, 8824 Schönenberg (CH)
(74) Vertreter: Grünecker Patent- und Rechtsanwälte PartG mbB
(86) Internationale Anmeldenummer: PCT/CH2017/000006
(87) Internationale Veröffentlichungsnummer: WO 2017/124201

(56) Entgegenhaltungen:
- EP-A1- 1 228 701
- EP-A1- 1 595 458
- EP-A2- 2 378 892
- DE-C- 919 922
- US-A- 4 994 272
- NELEN B A P ET AL: "6. Sucrose esters", 1 January 2004 (2004-01-01), EMULSIFIERS IN FOOD TECHNOLOGY, BLACKWELL PUBLISHING LTD, OXFORD, PAGE(S) 131 - 161, XP002629989, ISBN: 978-1-4051-1802-6
- "ANTIMICROBIALS: ASSURING FOOD SAFETY. ÖANTIMICROBIALS EXTEND SHELF-LIFE AND ENSURE THE SAFETY OF FOOD", FOOD TECHNOLOGY, INSTITUTE OF FOOD TECHNOLOGISTS, CHICAGO, IL, US, vol. 48, no. 6, 1 June 1994 (1994-06-01), pages 102-110, XP000453022, ISSN: 0015-6639

## Beschreibung

### Gebiet der Erfindung

Die Erfindung betrifft ein Verfahren zur Gewinnung von wertbestimmenden Inhaltsstoffen wie Aromastoffen und Vitaminen und einem Essenzöl aus Lebensmitteln ausgewählt aus zum Verzehr geeigneten Kräutern oder Gewürzen.

### Stand der Technik

In der Lebensmittelindustrie besteht der Trend die Essenzen und die Aromen von frischen Lebensmitteln auch in lange haltbaren Produkten bereitstellen zu können. Für eine lange Haltbarkeit ist es allerdings notwendig, die zu verarbeitende Rohware möglichst wasserfrei zu machen. Wasser ist die Grundlage der meisten Bakterien und Keime, welche zu einem raschen Verderben von Lebensmitteln führen. Deshalb sind die Versuche, Aromen zu konservieren, zumeist auf Pulver beschränkt

Eine weitere Möglichkeit, Aromen zu konservieren, ist die Flüssig-Flüssig-Extraktion, bei welcher Aromen selektiv aus einer Pulp-Phase extrahiert werden. Auf Basis der Extraktion ist aus der US 2012/0237910 A1 ein Verfahren bekannt, um natürliche Extrakte zu erhalten. Allerdings gestaltet sich das Verfahren als sehr aufwendig, da eine Pulp-Phase fermentiert wird, bevor diese in einem ersten Zentrifugierschritt in eine flüssige Phase und eine pastöse Phase getrennt wird. Die flüssige Phase muss in einem zweiten Zentrifugierschritt behandelt werden, um die natürlichen Extrakte zu erhalten.

In der EP 1228701 A1 ist ein Verfahren zur Gewinnung von nativen, organischen Stoffen, wie Farbstoffen oder Vitaminen offenbart. Die Gewinnung erfolgt, indem das Ausgangsprodukt zerkleinert wird und zur Bildung eines Breis Wasser zugesetzt wird. Aus dem Brei werden mit Hilfe eines Exraktionsmittels die lipophilen Stoffe extrahiert. In einem Zentrifugalfeld wird der Brei in 2 Phasen aufgetrennt, nämlich in eine wässrige, feste Bestandteile enthaltende Phase und eine flüssige, organische Phase, welche die lipophilen Stoffe enthält. Der Brei wird fein vermahlen. Das Optimum liegt bei einer Partikelgrösse von 500 ± 250 µm. Die flüssige organische Phase wird filtriert, um ein Resin bzw. ein Harz zu gewinnen. Die Haltbarkeit des Extrakts ist zwangsläufig eingeschränkt, da nicht nur der oder die Wertstoffe extrahiert werden, sondern auch teilweise

Keime bzw. Mikroorganismen. Zur Erzielung einer langen Haltbarkeit ist dieses Verfahren daher ungeeignet

In der US 4,246,184 wird ein Verfahren zur Gewinnung von Pflanzenöl beschrieben. Maiskeime werden mit einer Hammermühle vermahlen. Das Mahlgut wird getrocknet. Im nächsten Verfahrensschritt wird das Pflanzengut aus dem Mahlgut mit einem Extraktionsmittel, beispielsweise Hexan extrahiert. Um ein Pflanzenöl zu erhalten wird das Extrakt von dem Extraktionsmittel konventionell getrennt. Während der Vermahlung der Maiskeime kommt es jedoch zu einer teilweisen Oxidation und Zerstörung der Inhaltsstoffe, beispielsweise der Aromastoffe. Die Qualität des gewonnenen Pflanzenöls leidet daher bei der offenbarten Ölextraktion.

US 4 994 272 A offenbart ein Verfahren, welches die Feinstvermahlung von Lupinensamen auf Teilchengrößen von 1 bis 50 µm vorsieht. EP 1 595 458 A1 beschreibt eine Feinstvermahlung eines Lebensmittels auf Teilchengrößen von 20 bis 500 µm vor oder während der Zugabe eines Lösemittels, wobei der Vermahlungsschritt einer Emulsifikation in einem Doppelschneckenextruder vorausgeht. Eine Trennung in drei Phasen ist in diesen Dokumenten nicht offenbart. DE 919 922 C offenbart die Extraktion fettlöslicher Wertstoffe aus Möhren.

In B.A.P Nelen et al. "6. Sucrose esters", Emulsifiers in Food Technology, Blackwell Publishing Ltd., Oxford 2004, S. 131-161 und "Antimicrobials: Assuring Food Safety" Food Technology, Institute of Food Technologists, Chicago, IL, US, Bd. 48, Nr. 6, 1996, S. 102-110 wird die antimikrobielle Wirkung von konzentrierten Zucker- und Salzlösungen beschrieben.

EP 2 378 892 A2 offenbart ein Verfahren zur Verarbeitung von Kakaobohnen mit wässrigen Extraktionsmitteln.

### Aufgabe der Erfindung

Aus den Nachteilen des beschriebenen Stands der Technik resultiert die die vorliegende Erfindung initiierende Aufgabe, ein Verfahren zur Gewinnung von Wertstoffen zu zeigen, bei welchem die wellbestimmenden Inhaltsstoffe, insbesondere Aromastoffe und Vitamine, möglichst hochkonzentriert unter Vermeidung von Oxidation gewonnen werden und gut bzw. lange haltbar sind. Dadurch sollen Aromen gewonnen werden, welche mit den Aromen von frischen Lebensmitteln vergleichbar sind und an deren Qualität herankommen. Ferner soll das Verfahren möglichst unkompliziert und einfach zu realisieren sein.

### Beschreibung

Die Lösung der gestellten Aufgabe gelingt durch ein Verfahren zur Gewinnung von Inhaltsstoffen wie Aromastoffen, Vitaminen und Polyphenolen aus Lebensmitteln ausgewählt aus zum Verzehr geeigneten Kräutern oder Gewürzen dadurch, dass das Lebensmittel mit Pflanzenöl als Extraktionsmittel feinstvermahlen werden, wobei die Feinstvermahlung dadurch definiert ist, dass das Lebensmittel mit dem Extraktionsmittel solange vermahlen wird, bis die Ölphase eine mittlere Partikelgrösse von kleiner als 300 µm, bevorzugt von kleiner als 100 µm und besonders bevorzugt von kleiner als 20 µm aufweist und dass der Brei in einem Drei-Phasen-Separator in eine Feststoffphase, eine Ölphase zur Gewinnung eines Essenzöls und eine Wasserphase aufgetrennt wird.

Die Feinstvermahlung führt zu einer überraschenden Reduktion der sich in dem Rohstoff befindenden Keime bzw. Mikroorganismen. Dementsprechend können nur Inhaltsstoffe mit obiger definierter Partikelgrössenverteilung in die Ölphase übergehen, da keine grösseren Partikel in dem feinstvermahlenen Brei vorhanden sind. Die angegebenen mittleren Partikelgrössen in der Ölphase geben daher Auskunft, ob die Prozessführung richtig erfolgte. Bei einer unzureichenden Zerkleinerung wird die Anzahl der Keime nur unzureichend reduziert, da kein ausreichend grosser Scherstress auf die Keime wirkt. Eine ausreichende Zerkleinerung ist auch wesentlich um eine effiziente Extraktion der Wertstoffe, wie Aromastoffe und Vitamine, in der Ölphase zu erzielen. Bei der Feiristvermahlung von frischem Pflanzenmaterial werden auch Phytoalexine freigesetzt, welche die Mikroorgartismenflora hemmen oder sogar inaktivieren.

Überraschenderweise lässt sich der Brei in drei Phasen auftrennen, denn zu erwarten wäre bei einer Feinstvermahlung die Bildung einer Emulsion. Die Bildung der Wasserphase hat den Vorteil, dass sich Keime vermehrt in dieser Phase anreichern können und nicht in die Ölphase übergehen, da diese in dem Drei-Phasen-Separator in Gestalt eines Drei-Phasen-Dekanters gleichzeitig mit der Wasserphase abgetrennt wird und deshalb keinen Kontakt zu der Ölphase hat. Der Drei-Phasen-Dekanter ermöglicht es, dass der Brei mit hoher Trennleistung in die Ölphase, die Wasserphase und die Feststoffphase abgetrennt wird. Deshalb ist in der Ölphase wenig Wasser vorhanden und es können nur wenig Keime oder Enzyme von der Wasserphase in die Ölphase übergehen.

Würde der Brei in einem Zwei-Phasen-Separator abgetrennt werden, so wäre die Trennleistung bedeutend geringer, es würde sich in der abgetrennten Ölphase auch eine bedeutende Menge Wasser befinden. In der Ölphase bleibt daher Öl mit bedeutend mehr Wasser als bei der Drei-Phasen Separation in Kontakt und Keime und Enzyme können in das öl übergehen und sich vermehren bzw. wirken. Für die Anforderung einer langen Haltbarkeit der Ölphase bzw. des daraus gewonnen Essenzöls ist ein Zwei-Phasen-Dekanter daher ungeeignet.

Im Sinne der vorliegenden Erfindung ist das Extraktionsrnittel ein Pflanzenöl. Dadurch lassen sich die fettlöslichen Wertstoffe des Lebensmittels in dem Pflanzenöl anreichern.

In einer weiteren bevorzugten Ausführungsform der Erfindung wird dem Extraktionsmittel eine Salzlösung oder eine Zuckerlösung beigemengt. Die konzentrierte Salz- bzw. Zuckerlösung kann eine Inaktivierung der Mikroorganismen bewirken, indem Wasser aus den Zellen der Mikroorganismen in die konzentrierten Lösungen übergeht, um einen Konzentrationsausgleich zu erreichen. Die Wasserphase, welche aus dem Drei-Phasen-Dekanter erhältlich ist, ist mit Zucker oder Salz und wasserlöslichen wertbestimmenden Inhaltsstoffen angereichert. Durch Trocknung lässt sich aus der Wasserphase ein Essenzsalz oder ein Essenzzucker herstellen, welcher mit wertbestimmenden Inhaltsstoffen angereichert ist.

In der weiteren bevorzugten Ausführungsform der Erfindung ist das Extraktionsmittel eine Mischung aus einem Pflanzenöl und einer konzentrierten Salzlösung oder das Extraktionsmittel ist eine Mischung aus einem Pflanzenöl und einer konzentrierten Zuckerlösung. Denkbar ist es auch, dass das Extraktionsmittel eine Mischung aus einem Pflanzenöl, einer konzentrierten Zucker- und einer konzentrierten Salzlösung ist. Dadurch lassen sich mehrere Endprodukte gleichzeitig herstellen.

In einer bevorzugten Ausführungsform wird dem Extraktionsmittel ein Zusatz mit antioxidativer Wirkung, beispielsweise Vitamin C, Essig, Oxalsäure oder Tocopherol zugesetzt. Dadurch lässt sich die Haltbarkeit der Endprodukte noch weiter verlängern. Die Gefahr, dass das Essenzöl ranzig wird, ist durch die Beigabe der Aktivsubstanzen sehr gering.

In einer bevorzugten Ausführungsform der Erfindung werden dem Lebensmittel neben dem Extraktionsmittel (dem Pflanzenöl) auch noch Ergänzungsstoffe zugegeben. Dies können beispielsweise Salze oder Säuren zur Modifikation des pH-Wertes sein. Auch Vitamin-C-reiche Pflanzenteile zum Oxidationsschutz, beispielsweise Sanddorn oder Acerola, können dem Lebensmittel zugegeben werden.

In einer bevorzugten Ausführung des erfindungsgemässen Verfahrens wird nach der Feinstvermahlung des Breis eine Ölphase geschaffen, in der die fettlöslichen Inhaltstoffe wie Aromastoffe und Vitamine extrahiert werden, eine Wasserphase geschaffen, in der Keime und andere wasserlösliche Substanzen angereichert werden und eine Fest∼ stoffphase geschaffen, in der die festen Reste verbleiben. Die Bildung der Wasserphase ermöglicht neben der Feinstvermahlung eine weitere Reduktion der Keime in der Ölphase. Da in der aufbereiteten Ölphase weder Wasser noch Sauerstoff vorhanden ist, stellen die in der Ölphase vorhandenen wenigen Keime auch bei längerer Lagerung des Endproduktes keine Gefahr dar.

Als zweckdienlich hat es sich erwiesen, wenn die Feinstvermahlung in einer Zahnkolloidmühle ausgeführt wird, deren Mahlspalt vorzugsweise kleiner als 0,1 mm ist. Die Auswahl dieser Mühlenart und der kleine Mahlspalt führen zu einer zuverlässigen Feinstvermahlung, welche die Reduktion der Keime in der Ölphase sicherstellt. Es versteht sich, dass die Grösse des Mahlspaltes an das jeweilige zu zerkleinernde Lebensmittel anzupassen ist.

Zweckmässigerweise wird die Feinstvermahlung in zwei Stufen ausgeführt, um die einzelnen Mühlen nicht zu überlasten. Bevorzugt ist es, wenn die erste Mahlstufe in einer Lochscheibenmühle ausgeführt wird und die zweite Mahlstufe in einer Zahnkolloidmuhle ausgeführt wird. Die Lochscheibenmühle ermöglicht eine Vorzerkleinerung der Ausgangsstoffe, wohingegen in der Zahnkolloidmuhle die für die Reduktion der Keimzahlen notwendige Feinstvermahlung vorgenommen wird. Um eine noch feinere Feinstvermahlung des Breis zu erzielen, kann eine dritte Mahlstufe vorgesehen sein, wobei in der dritten Mühlenstufe bevorzugt eine Kugelmühle zur Anwendung kommt. Durch die drei Stufen ist eine Zerkleinerung bis zu einer mittleren Partikelgrösse von 20 µm in der Ölphase erzielbar. Anstatt der Zahnkolloidmühle kann zum Beispiel auch eine Korrundscheibenmühle eingesetzt werden.

Die Erfindung zeichnet sich auch bevorzugt dadurch aus, dass die Feinstvermahlung bei Raumtemperatur ausgeführt wird. Aromastoffe, Polyphenole und Vitamine werden bei diesen niedrigen Temperaturen zwischen 17°C und 25°C schonend behandelt und können in hohen Konzentrationen in das Extraktionsmittel (insbesondere das Pflanzenöl) extrahiert werden. Versuche haben ergeben, dass eine Feinstvermahlung mit einem Extraktionsmittel (insbesondere Pflanzenöl) bei 80 °C zu keiner weiteren Reduktion der Keime führt, verglichen mit einer Aufgabe des Extraktionsmittels (insbesondere des Pflanzenöls) bei Raumtemperatur.

In einer besonders bevorzugten Ausführungsform des erfindungsgemässen Verfahrens wird das Lebensmittel frisch, bevorzugt unmittelbar nach der Ernte, bereitgestellt. Das Lebensmittel wird daher insbesondere innerhalb von weniger als 24h, bevorzugt innerhalb von weniger als 12h und besonders bevorzugt innerhalb von weniger als 6h bereitgestellt. Die Wertstoffe des Lebensmittels werden demnach nicht durch Lagerung und Haltbarmachung reduziert oder in ihrer Qualität verschlechtert, sondern werden in kürzester Zeit in die Ölphase extrahiert. Der logistische Mehraufwand wird durch die hohe Qualität des aus der Ölphase gewonnenen Essenzöls gerechtfertigt. Denkbar ist es jedoch auch getrocknete Lebensmittel als Ausgangsstoffe zu verwenden. Auch bei getrockneten Ausgangsstoffen funktioniert die Reduzierung der Mikroorganismen durch Feinstvermahlung.

Als vorteilhaft erweist es sich, wenn die Ölphase durch eine Vakuumentlüftung entgast und entwässert wird. Unabhängig von der verwendeten Methode ist es zur Stabilisierung der wenigen in der Ölphase vorhandenen Keime bzw. Mikroorganismen vorteilhaft den Wassergehalt in der Ölphase möglichst gering zu halten. Dadurch wird den in der Ölphase vorhandenen Keimen die Lebensgrundlage entzogen.

Zweckmässigerweise steigt die Temperatur während der Feinstvermahlung um 10 bis 20 °C und bevorzugt um 5 bis 10 °C. Die Lebensmittel, insbesondere Pflanzen, werden daher bei geringer Temperatur feinstvermahlen, wodurch die zu extrahierenden Wertstoffe durch Wärme möglichst unbeeinflusst extrahiert werden können.

Um die Ölphase einer Temperaturbehandlung unterziehen zu können, wird die Ölphase einer Wärmebehandlung und einer anschliessenden Abkühlung unterzogen. Beispielsweise durch einen Wärmetauscher kann die Ölphase schnell und schonend auf 80°C wahlweise je nach Keimbelastung bis auf 150°C gebracht werden, um die Keimzahl weiter zu reduzieren. Dadurch ist es ermöglicht die Anzahl der Mikroorganismen in der ölphase zusätzlich durch mermische Behandlung zu reduzieren, falls dies notwendig sein sollte. Ferner kann falls notwendig eine Tyndallisierung erfolgen. Beim Tyndallisieren wird mehrfach hintereinander erhitzt und abgekühlt, um Sporen zum Auskeimen zu bringen und sie anschliessend inaktivieren zu können.

Alternativ oder zusätzlich kann vorgesehen sein, dass die Ölphase einer Wärmebehandlung unterzogen wird, wobei die Temperatur der Ölphase dabei vorzugsweise auf mindestens 40 oder 80°C und/oder höchstens 100 oder 150°C erhöht wird.

Bevorzugt ist es, wenn die Ölphase in einem 2 Phasen-Separator von Sedimenten und Schwebstoffen befreit wird. Dadurch lässt sich ein klares Endprodukt in Gestalt des Essenzöls herstellen und während einer Temperaturbehandlung gebildete Kolloide können abgetrennt werden.

Wie bereits ausgeführt wird durch die Feinstvermahlung in der Ölphase bevorzugt eine Reduktion der Keimzahl und/oder eine mikrobiologische Stabilisierung erzielt. Dies ist von besonderem Vorteil, da keinerlei Konservierungsstoffe oder andere Additive für ein mikrobiologisch unbedenkliches Endprodukt notwendig sind. In dem als Essenzöl bezeichneten Endprodukt sind neben den extrahierten frischen Wertstoffen des Rohstoffes vorzugsweise keine Zusatzstoffe, insbesondere keine Konservierungsstoffe, zugesetzt.

Durch die Bildung und Abtrennung der Wasserphase wird die Keimzahl in der Ölphase verglichen mit der Keimzahl der Ölphase bei einer 2-Phasen-Separation bevorzugt reduziert. Die Reduktion der Keime in der Ölphase wird daher in zwei Stufen vorgenommen, einerseits durch die Feinstvermahlung und andererseits durch die Abtrennung der Wasserphase.

In einer weiteren bevorzugten Ausführungsform der Erfindung wird durch die Bildung und Abtrennung der Wasserphase und/oder die Feinstvermahlung in der Ölphase die Konzentration an Präsumtive Bacillus cereus auf weniger als 100 kolonienbildende Einheiten /g und die Konzentration an Enterobacteriaceae auf weniger als 10 kolonienbildende Einheiten / g reduziert. Die Ölphase besitzt dann eine sehr geringe Konzentration an Bakterien und mikrobiologischen Kontaminationen. Die Bildung und Abtrennung der Wasserphase in dem Drei-Phasen-Separator führt daher zu einer überraschend hohen Reinheit und langen Haltbarkeit der Ölphase.

Als vorteilhaft erweist es sich, wenn durch das Verfahren wenigstens 90% der in dem Lebensmittel vorhandenen fettlöslichen Vitamine in die Ölphase extrahiert werden. Da ein Grossteil der in dem Lebensmittel enthaltenen Vitamine durch das Verfahren in die Ölphase extrahierbar ist kann durch das Verfahren ein Essenzöl hergestellt werden, das reich an fettlöslichen Vitaminen ist

Zweckmässigerweise nimmt mit zunehmendem Grad der Feinstvermahlung der Anteil der in dem Lebensmittel vorhandenen fettlöslichen Vitamine, der in die Ölphase extrahiert wird, zu. Experimente haben beispielsweise gezeigt, dass sich der Vitamin-K-Gehalt in der Ölphase um 30% steigern lässt, wenn die mittlere Partikelgrösse von 660 µm auf 80 µm reduziert wird.

Ein weiterer Aspekt der Erfindung betrifft ein Essenzöl mit einer mittleren Partikelgrösse von kleiner als 300 µm, bevorzugt von kleiner als 100 µm und besonders bevorzugt von kleiner als 20 µm. Da die extrahierten Inhaltsstoffe in dem Essenzöl sehr klein sind, sind die Keimzahlen in dem Essenzöl sehr gering und dieses ist mikrobiologisch unbedenklich und haltbar, ohne dass Zusatzstoffe notwendig wären.

Bevorzugt ist es, wenn in dem Essenzöl die Konzentration an Präsumtive Bacillus cereus kleiner als 100 kolonienbildende Einheiten /g und die Konzentration an Enterobacteriaceae kleiner als 10 kolonienbildende Einheiten /g ist. Das Essenzöl kann dadurch im Hinblick auf die Mikrobiologie eine Haltbarkeit von wenigstens 12 Monate erhalten.

Als vorteilhaft erweist es sich, wenn die Konzentrationen der Aroma-Substanzen in dem Essenzöl über 20 Tage und bevorzugt über 40 Tage bei 20°C bis 40°C im Wesentlichen stabil bleiben. Analysen haben ergeben, dass beispielsweise bei der Extraktion von frischer Petersilie in dem Essenzöl die Aromastoffe Myrcen und (Z)-3-HexenyIacetat während 40 Tagen Halbarkeitstest stabil blieb. Dadurch hat das Essenzöl auch noch nach 40 Tagen einen frischen, kräuterartigen Geschmack. Bei dem Haltbarkeitstest eines Essenzöls mit frischem extrahierten schwarzen Pfeffer sind die Konzentrationen aller analysierten Aroma-Substanzen zumindest konstant geblieben. Beispielsweise wurde die Konzentration von Limonen, α-Phellandren und Linalool gemessen. Bei den entsprechenden Konzentrationsmessungen mit frischem extrahierten Knoblauch sind die Konzentrationen der für Knoblauch typischen Aroma-Substanzen Allylsulfid und Allyldisulfid ebenfalls während 40 Tagen konstant geblieben.

Offenbart sei ein Verfahren zur Gewinnung von Inhaltsstoffen wie Aromastoffen, Vitaminen und Polyphenolen aus Lebensmitteln umfassend die folgenden Schritte: Bereitstellung eines Lebensmittels ausgewählt aus zum Verzehr geeigneten Kräutern oder Gewürzen; Zugabe eines Pflanzenöls als Extraktionsmittel zum Lebensmittel; Vermahlung des Lebensmittels und des Extraktionsmittels zu einem Brei; und Auftrennung des erhaltenen Breis (vorzugsweise in einem Drei-Phasen-Separator, insbesondere einem Drei-Phasen-Dekanter) in eine Feststoffphase, eine Ölphase und eine Wasserphase. Dabei ist vorgesehen, dass die genannte Vermahlung (insbesondere eine Feinstvermahlung) und/oder die genannte Auftrennung durchgeführt werden, so dass die mittlere Partikelgrosse in der Ölphase und/oder einem daraus hergestellten Essenzöl kleiner als 300 µm, bevorzugt kleiner als 100 µm und besonders bevorzugt kleiner als 20 µm ist
Weitere Vorteile und Merkmale ergeben sich aus der nachfolgenden Beschreibung eines Ausführungsbeispiels der Erfindung unter Bezugnahme auf die schematischen Darstellungen. Es zeigen:
- Figur 1:: ein Flussdiagramm eines Verfahrens zur Gewinnung von Wertstoffen wie Aromastoffe und Vitamine;
- Figur 2:: ein Diagramm, welches die Abnahme der Gesamtkeimzahl illustriert;
- Figur 3:: einen Graph der Partikelgrössenverteilung mit Minze als Rohstoff;
- Figur 4:: einen Graph der Partikelgrössenverteilung mit Zwiebel als Rohstoff; und
- Figur 5:: ein Flussdiagramm einer zweiten Ausführungsform des Verfahrens zur Gewinnung von Wertstoffen wie Aromastoffe und Vitamine.

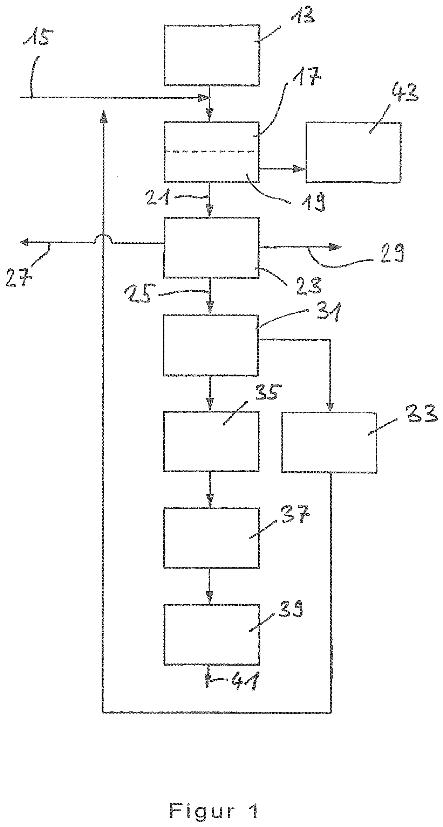

In Figur 1 ist ein Flussdiagramm eines Verfahrens zur Gewinnung von Wertstoffen, insbesondere von Aromastoffen, Vitaminen und Polyphenolen aus frischen Lebensmitteln gezeigt. Insbesondere werden als Rohstoffe frisch geerntete, zum Verzehr geeignete Kräuter oder Gewürze verarbeitet.

Dabei ist es besonders bevorzugt, wenn die Pflanzen möglichst frisch verarbeitet werden, um diesen möglichst viele unverfälschte Aromen entziehen zu können. Denn durch Lagerung und Haltbarmachung verlieren Pflanzen zwangsläufig ihr frisches und ureigenes Aroma. Die Zeit zwischen der Ernte der Pflanze und der Verarbeitung sollte daher so kurz wie möglich gehalten werden. Die als Rohstoff verarbeiteten Pflanzen sind mit der Bezugsziffer 13 bezeichnet.

Die Pflanzen 13 werden gewaschen und zusammen mit einem Pflanzenöl 15 einer Feinstvermahlung zugeführt. Falls die Pflanzen 13 einen sehr geringen Wassergehalt aufweisen, kann optional Wasser zugegeben werden. Das Pflanzenöl 15 ist bevorzugt ein Pflanzenöl, welches überwiegend langkettige Fettsäuren aufweist, damit einem ungewollten Ranzigwerden des Pflanzenöls vorgebeugt wird. Beispielsweise kann Sonnenblumenöl oder Rapsöl verwendet werden. Unter einer Feinstvermahlung wird im Rahmen dieser Anmeldung vorzugsweise eine Vermahlung in einer Mühle verstanden, welche zu einer mittleren Partikelgrösse von unter 300 µm in der Ölphase führt. Im Rahmen dieser Patentanmeldung wird die mittlere Partikelgrösse vorzugsweise dadurch definiert, indem alle Partikelgrössen entsprechend ihrem Volumenanteil im Kollektiv beitragen. Die mittlere Partikelgrösse im Intervall wird mit dem entsprechenden Volumenanteil gewichtet und über alle diese gewichteten Werte wird arithmetisch gemittelt. Gemässe einer Variante kann die Partikelgrösse durch Sieben, Filtrieren oder mittels Laserphotometer bestimmt werden. Bevorzugt wird die Feinstvermahlung zweistufig vorgenommen, um möglichst rasch und zuverlässig zu der angestrebten Partikelgrössenverteilung (PGV) zu gelangen. Beispielsweise kann die erste Mahlstufe in einer Lochscheibenmühle 17 ausgeführt werden und die zweite Mahlstufe kann in einer Zahnkolloidmühle 19 ausgeführt werden. Die Zahnkolloidmühle 19 ist bevorzugt mit einem Mahlspalt von kleiner als 0,1 mm ausgestattet, um die Feinstvermahlung zu erreichen. Die Mahlspaltgrösse ist an die zu zermahlende Pflanzen anzupassen. Deshalb kann die Mahlspaltgrösse auch andere Grössen als die 0,1 mm aufweisen. Durch die Feinstvermahlung wird auf die eingebrachten Mikroorganismen ein Scher-/Prall- und Dichtestress ausgeübt, welcher zu einer Reduzierung der lebenden Mikroorganismen führt.

Bevorzugt wird das Pflanzenöl 15 bei Raumtemperatur aufgegeben, da Versuche mit einer Pflanzenölaufgabe bei 80°C keine Verbesserungen der Stabilisierung der Mikrobiologie mit sich brachten. Wenn die Mikrobiologie stabil ist, so kann sie sich die Gesamtheit der Keime nicht mehr vermehren, was für eine ausreichende Haltbarkeit von Bedeutung ist. Diese Versuche die Mikrobiologie betreffend, werden weiter untenstehend noch genauer diskutiert. Die thermische Inaktivierimg verschiedener Enzyme fuhrt zur Erhaltung wertgebender Inhaltsstoffe wie beispielsweise dem Chlorophyll.

Das Zwischenprodukt, welches die Feinstvermahlung verlässt, wird als Brei 21 bezeichnet. Durch die Feinstvermahlung begründet ist es überraschenderweise möglich, den Brei 21 in drei Phasen aufzutrennen. Vielmehr wäre eine Emulsionsbildung zu erwarten. Die Trennung der drei Phasen wird mit einem 3-Phasen-Separator in Gestalt einer Drei-Phasen-Dekanter-Zentrifuge 23 realisiert. Der Brei 21 lässt sich in eine Ölphase 25, eine Wasserphase 27 und eine Feststoffphase 29 auftrennen.

In der Ölphase 25 werden die Aromen und Essenzen des Ausgangsstoffes extrahiert. Die Analyse der Mikrobiologie in der Ölphase 25 führt zu überraschend niedrigen Konzentrationen an Mikroorganismen bzw. an Keimen (siehe weiter unten). Dies ist dem Scher/Prall- und Dichtestress während der Feinstvermahlung und der Abwesenheit von Wasser und Sauerstoff geschuldet. Da in der Ölphase 25 weder Wasser noch Sauerstoff vorhanden ist, bleibt die Anzahl der in der Ölphase 25 verbleibenden Mikroorganismen stabil, auch bei längerer Lagerdauer des Endproduktes.

In der Ölphase 25 reichern sich die fettlöslichen Inhaltsstoffe des Rohstoffes an. Zu den fettlöslichen Inhaltsstoffen zählen Aromastoffe und Vitamine. Aromastoffe und Vitamine sind, sofern in dem Rohstoff vorhanden, in dem aus der Ölphase 25 erhältlichen Endprodukt besonders hoch konzentriert. Auch Polyphenole, wenngleich diese überwiegend in der Wasserphase angereichert, sind ebenfalls in der Ölphase vorhanden. Das Endprodukt wird daher als Essenzöl bezeichnet.

Das Bilden und Abtrennen der Wasserphase 27 führt dazu, dass sich in der Wasserphase Keime anreichern können und demzufolge in der Ölphase abgereichert werden.

In der Feststoffphase verbleiben alle Inhaltsstoffe des Ausgangstoffes, welche weder in die Ölphase 25 noch in die Wasserphase 27 übergehen.

Die nächsten Verfahrensschritte dienen der Optimierung der Qualität des finalen Produktes (Essenzöl).

In einem nächsten Verfahrensschritt wird in einem Vakuum entlüfter 31 die Ölphase 25 von Wasserresten und wasserlöslichen flüchtigen Bestandteilen und wasserlöslichen Aromastoffen getrennt. Die abgetrennte Aromaphase 33 kann (vorzugsweise nach weiterer Aufbereitung, etwa durch Destillation, einer Kühlfalle oder Membranverfahren) zur Aromatisierung anderer Produkte verwendet werden.

In einem nächsten Verfahrensschritt kann eine Wärmebehandlung 35 und eine nachfolgende Kühlung 37 der Ölphase vorgesehen sein, um die Ölphase bei Bedarf thermisch behandeln zu können.

In einer Zentrifuge 39 kann ein sich in der Ölphase 25 gebildeter Bodensatz abgetrennt werden.

Die Ölphase 25 kann auch homogenisiert werden.

Bevorzugt ist es, wenn das Endprodukt in eine Abfüllstation in eine Bag-In-Box Verpackung abgefüllt wird. In einer solchen Verpackung ist auch nach einer Produktentnahme der Kontakt des in dem Beutel verbleibenden Produkts mit Luftsauerstoff verhindert. Dadurch ist das Endprodukt besonders lange haltbar.

Das Endprodukt ist reich an Wertstoffen wie Aromastoffen, Vitaminen und Polyphenolen und wird deshalb als Essenzöl 41 oder Pflanzenessenz bezeichnet Die mikrobiologische Stabilisierung in der Ölphase 25 erfolgt durch die Feinstvermahlung und die Abtrennung der Wasserphase. In einem Ausführungsbeispiel wurde als Ausgangsstoff Minze mit dem erfindungsgemässen Verfahren verarbeitet. Untenstehende Tabelle zeigt, dass die kolonienbildenden Einheiten /g (KBE/g) nach der Feinstvermahlung signifikant reduziert wurden. Da durch die Feinstvermahlung der Brei 21 durch die Keimzahlreduktion bereits mikrobiologisch stabil ist, ist es auch denkbar den Brei als ein weiteres Endprodukt als eine hocharomatische Paste 43 zu verwenden. Durch Trennung der Ölphase 25 von der Wasserphase 27 konnten insbesondere die aeroben Keime nochmals stark reduziert werden.

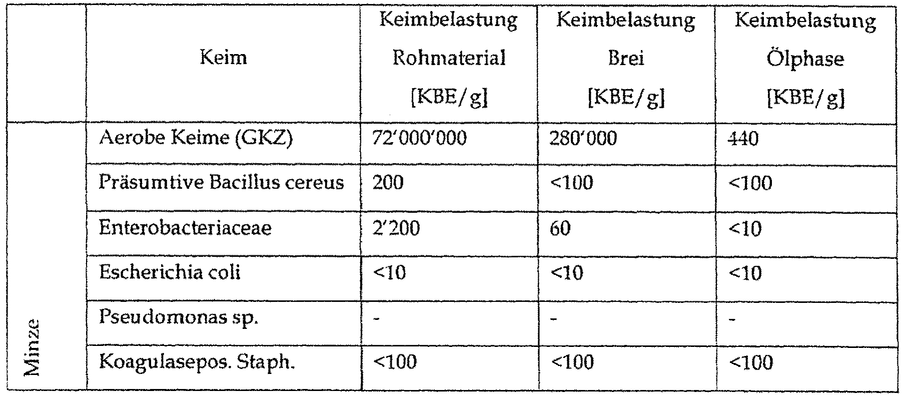

Ein Versuch mit Lauch hat gezeigt, dass die Aufgabe des Pflanzenöls bei Raumtemperatur gegenüber einer solchen bei 80°C zu keiner Veränderung der Keimzahl in der Ölphase führte. Dies hat den Vorteil, dass das erfindungsgemässe Verfahren besonders schonend bei Raumtemperatur erfolgen kann, ohne dass die Keimzahl im Endprodukt dadurch steigen würde. Bevorzugt wird die Prozesstemperatur während der Feinstvermahlung niedrig gehalten, indem sich die Temperatur während dem Mahlen um lediglich höchstens 15 °C steigt.

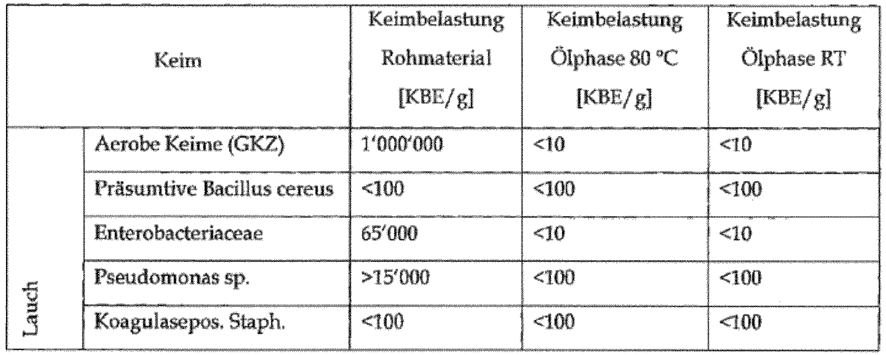

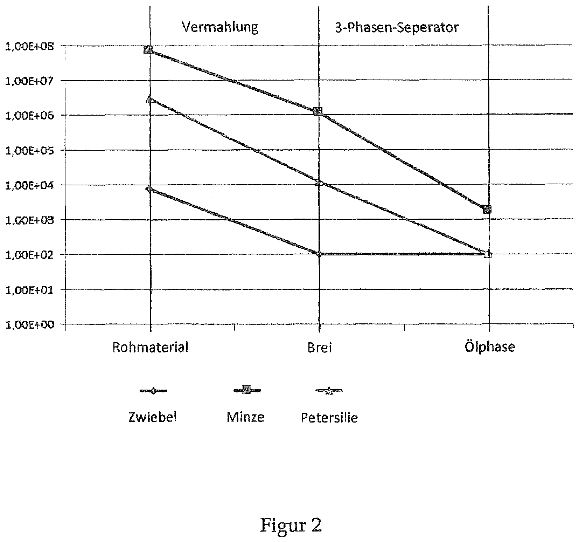

In dem Diagramm gemäss Figur 2 ist die Abnahme der Gesamtkeirnzahl mit Zwiebel, Minze oder Petersilie als Rohstoff illustriert. Es ist gezeigt dass nicht nur die Feinstvermahlung einen Einfluss auf die Reduktion der Gesamtkeimzahl hat. In nahezu gleich grossem Ausmass kann die Gesamtkeimzahl zusätzlich durch die Verwendung des Drei-Phasen-Dekanters 23 reduziert werden. Ein Grossteil der Keime kann sich in der Wasserphase 27 anreichern, wodurch die Kennzahl in der Ölphase in den Bereich von 100 kolonienbildenden Einheiten /g gebracht werden kann.

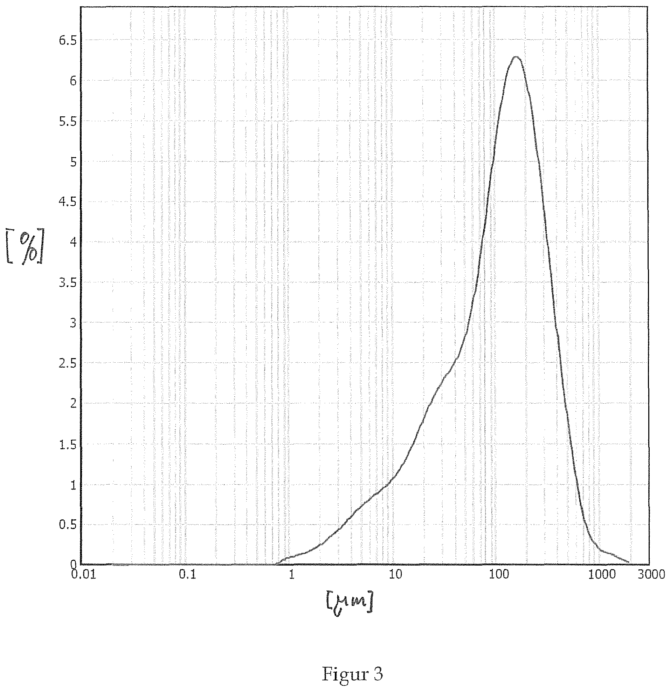

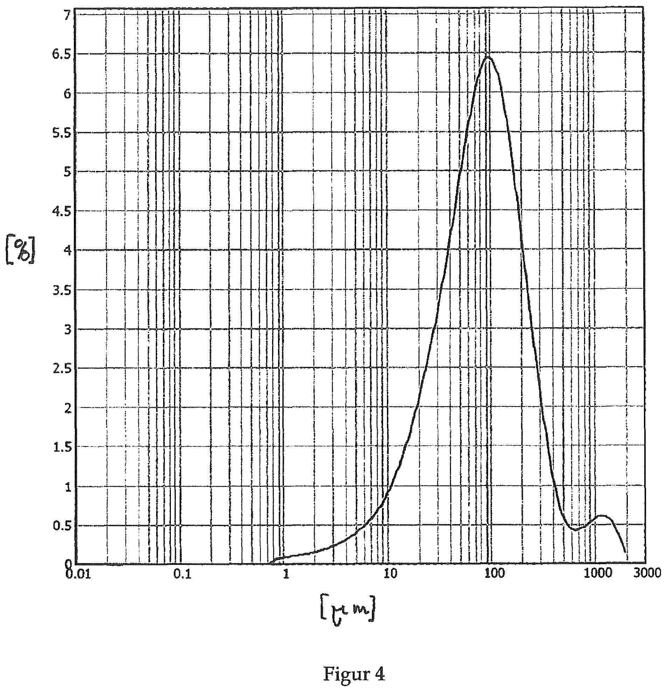

Eine Analyse der Partikelgrössenverteilung der Ölphase 25 hat für Minze und Zwiebel als Rohstoffe die Graphen gemäss den Figuren 3 und 4 als Ergebnis. Auf der Abszisse sind die Partikeldurchmesser in µm logarithmisch aufgetragen und auf der Ordinate sind die Volumentanteile in % linear aufgetragen. In der untenstehenden Tabelle sind die Durchmesserverteilungen angeführt, wobei angeführt ist wie viele Volumen % der Partikel einen kleineren Durchmesser als die angegebenen Werte haben:

| Rohmaterial | D(10%) | D(50%) | D(90%) |
|---|---|---|---|
| Minze | 18 µm | 83 µm | 273 µm |
| Zwiebel | 14 µm | 117 µm | 353 µm |

Der Medianwert x_{50,3} beträgt in der Ölphase 25 des erfindungsgemässen Verfahrens daher weniger als 300 µm, bevorzugt weniger als 100 µm und besonders bevorzugt weniger als 20 µm.

Der Modalwert x_{h,3} beträgt in der Ölphase 25 des erfindungsgemässen Verfahrens weniger als 300 µm, bevorzugt weniger als 100 µm und besonders bevorzugt weniger als 20 µm.

Die genügende Zerkleinerung des Rohstoffes durch die Feinstverrnahhing ermöglicht eine Extraktion der wertbestimmenden Inhaltsstoffe, insbesondere Aromastoffe und Vitamine, mit hohem Wirkungsgrad. Wie bereits ausgeführt, ist die Feinstvermahlung auch für die notwendige Reduktion der Keimzahlen in der Ölphase 25 essentiell. Die Prozessführung ist daher derart zu wählen, dass eine mittlere PGV von unter 300 µm in der Ölphase sicher erreicht wird. So können die gewünschten Effekte die Reduktion der Keimzahlen und die Extraktionseffizienz betreffend erzielt werden.

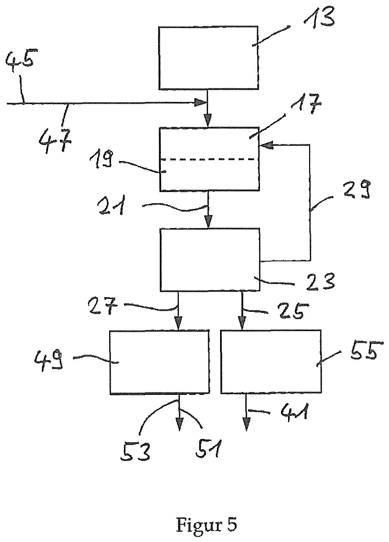

In Figur 5 ist ein Flussdiagramm einer zweiten Ausführungsform eines Verfahrens zur Gewinnung von wertbestimmenden Inhaltsstoffen gezeigt. Denkbar ist es auch, dass das Extraktionsmittel eine Mischung aus einem Pflanzenöl und einer konzentrierten Salzlösung ist oder eine Mischung aus einem Pflanzenöl und einer konzentrierten Zuckerlösung oder einer Mischung von Pflanzenöl, Zucker- und Salzlösung.

Das frische Lebensmittel 13 wird, wie schon bei der ersten Ausfuhrungsform, mit dem Extraktionsmittel oder der Mischung aus Extraktionsmitteln feinstvermahlen, bevorzugt in einer ersten Mahlstufe 17 und in einer zweiten Mahlstufe 19.

Die Konzentration der Zuckerlösung beträgt zwischen 40 und 60 % (m/m) und bevorzugt zwischen 50 und 65 % (m/m). Die Konzentration der Salzlösung beträgt zwischen 10 und 30 % (m/m) und bevorzugt zwischen 15 und 25 % (m/m). Diese Konzentrationen an Zucker- und Salzlösung, welche maximal der Sättigungskonzentration entsprechen, führen zu einer antimikrobiellen Wirkung, da die konzentrierte Salz- bzw. Zuckerlösung zu einem treibenden Konzentrationsgefälle an den Zellmembranen der Mikroorganismen führt. Die Mikroorganismen und Keime werden durch das Lebensmittel 13, insbesondere ein frisches Lebensmittel, zwangsläufig eingebracht. Das in den Zellen der Mikroorganismen und Keimen enthaltene Wasser versucht in die Lösung zu gelangen, um den Konzentrationsunterschied an Zucker bzw. Salz auszugleichen. Dabei platzen die Zellen und die Konzentration an lebenden Mikroorganismen bzw. an Keimen wird in dem Brei 21 reduziert. Ferner werden Enzyme inaktiviert.

Nach der Feinstvermahlung wird der Brei 21 wie auch in der ersten Ausführungsform in einem Drei-Phasen-Separator beispielsweise in Gestalt einer Drei-Phasen-Dekanter-Zentrifuge 23 separiert. Die Wasserphase 27, welche neben dem gelösten Salz oder Zucker auch Wertstoffe enthält, kann einer Trocknung 49 unterzogen werden. Durch die Trocknung kristallisiert das Salz oder der Zucker. Der gebildete Feststoff ist mit in die Wasserphase extrahierten Wertstoffen angereichert. So lässt sich ein "Essenzsalz" 53 bzw. ein "Essenzzucker" 51 herstellen, welche mit dem Wertstoff angereichert sind. Die in der Drei-Phasen-Dekanter-Zentrifuge 23 entstehende Ölphase 25 kann nach einer Aufbereitung 55, wie sie bereits bei dem ersten Ausführungsbeispiel beschreiben wurde, als Essenzöl 41 genutzt werden. Die entstehende Ölphase 25 stammt bei der zweiten Ausführungsform aus dem Lebensmittel.

Dem Lebensmittel kann neben dem Extraktionsmittel auch noch eine Aktivsubstanz mit antioxidativer Wirkung zugegeben werden. Dadurch wird die Haltbarkeit der Endprodukte noch weiter verbessert. Die Aktivsubstanz wird in dem Brei 21 wenigstens teilweise aufgebraucht, um die antioxidative Wirkung sicher zu stellen. Die Aktivsubstanz kann beispielsweise Vitamin C, Essig, Oxalsäure oder Tocopherol sein oder in Rosmarin enthalten sein. Als Quelle für Oxalsäure ist Rhababersaft oder Rhababersaftkonzentrat denkbar. Die aus Essig und Oxalsäure gebildete Oxalessigsäure kann eine Enzymhemmung in dem Brei 21 bewirken. Die Oxalessigsäure, welche nicht aufgebraucht wird, kann mit Calcium ausgefällt werden, um die saure Wirkung aufzuheben.

### Legende:

- 13: Ausgangsstoff, Rohstoff, frische Pflanzen
- 15: Pflanzenöl
- 17: Lochscheibenmühle, erste Mahlstufe
- 19: Zahnkolloidmühle, zweite Mahlstufe
- 21: Brei
- 23: Drei-Phasen- Dekanter-Zentrifuge
- 25: Ölphase
- 27: Wasserphase
- 29: Feststoffphase
- 31: Vakuumentlüfter
- 33: Aromaphase
- 35: Wärmebehandlung
- 37: Kühlung
- 39: Zentrifuge, 2 Phasen-Separator
- 41: Essenzöl
- 43: Paste
- 45: Salzlösung
- 47: Zuckerlösung
- 49: Trocknung
- 51: Essenzzucker
- 53: Essenzsalz
- 55: Aufbereitung

## Patentansprüche

1. Verfahren zur Gewinnung von Inhaltsstoffen wie Aromastoffen, Vitaminen und Polyphenolen aus Lebensmitteln (13) umfassend die folgenden Schritte:
a) Bereitstellung eines Lebensmittels (13) ausgewählt aus zum Verzehr geeigneten Kräutern oder Gewürzen,
b) Zugabe eines Extraktionsmittels,
c) Vermahlung des Lebensmittels (13) und des Extraktionsmittels (15) zu einem Brei (21) und
d) Auftrennung in eine Extraktionsphase, welche eine Ölphase ist (25), und eine Feststoffphase (29) als Raffinatphase,
wobei das Lebensmittel (13) mit dem Extraktionsmittel (15) feinstvermahlen wird,
wobei die Feinstvermahlung dadurch definiert ist, dass das Lebensmittel (13) mit dem Extraktionsmittel (15) solange vermahlen wird, bis die Ölphase (25) eine mittlere Partikelgröße von kleiner als 300 µm, bevorzugt von kleiner als 100 µm und besonders bevorzugt von kleiner als 20 µm aufweist und wobei das Extraktionsmittel ein Pflanzenöl ist,
**dadurch gekennzeichnet,**
**dass** der Brei (21) in einem Drei-Phasen-Separator (23) in eine Feststoffphase (29), eine Ölphase (25) zur Gewinnung eines Essenzöls (41) und eine Wasserphase (27) aufgetrennt wird.

2. Verfahren nach Anspruch 1, **dadurch gekennzeichnet, dass** das Extraktionsmittel ferner eine Salzlösung und/oder eine Zuckerlösung umfasst.

3. Verfahren nach einem der Ansprüche 1 oder 2, **dadurch gekennzeichnet, dass** dem Extraktionsmittel ein Zusatz mit antioxidativer Wirkung, beispielsweise Vitamin C, Essig, Oxalsäure oder Tocopherol zugesetzt wird.

4. Verfahren nach einem der vorangehenden Ansprüche, **dadurch gekennzeichnet, dass** die Feinstvermahlung in einer Zahnkolloidmühle (19) ausgeführt wird, deren Mahlspalt vorzugsweise kleiner als 0,1 mm ist.

5. Verfahren nach einem der vorangehenden Ansprüche, **dadurch gekennzeichnet, dass** die Feinstvermahlung in zwei Stufen ausgeführt wird.

6. Verfahren nach Anspruch 5, **dadurch gekennzeichnet, dass** die erste Mahlstufe in einer Lochscheibenmühle (17) ausgeführt wird und die zweite Mahlstufe in einer Zahnkolloidmühle (19) ausgeführt wird.

7. Verfahren nach einem der vorangehenden Ansprüche, **dadurch gekennzeichnet, dass** die Feinstvermahlung bei Raumtemperatur ausgeführt wird.

8. Verfahren nach einem der vorangehenden Ansprüche, **dadurch gekennzeichnet, dass** die Ölphase (25) durch eine Vakuumentlüftung (31) entgast und entwässert wird.

9. Verfahren nach einem der vorangehenden Ansprüche, **dadurch gekennzeichnet, dass** die Temperatur des Breis (21) während der Feinstvermahlung um 10 bis 20 °C und bevorzugt um 5 bis 10 °C steigt.

10. Verfahren nach einem der vorangehenden Ansprüche, **dadurch gekennzeichnet, dass** die Ölphase (25) in einem 2-Phasen-Separator (39) von Sedimenten und Schwebstoffen befreit wird.

## Claims

1. Method for obtaining ingredients such as flavors, vitamins and polyphenols from food (13), comprising the following steps:
a) providing a food (13) selected from herbs or spices suitable for consumption,
b) adding an extractant,
c) grinding the food (13) and the extractant (15) into a mash (21), and
d) separating the mash into an extraction phase, which is an oil phase (25), and a solid phase (29) as raffinate phase,
wherein the food (13) is finely ground with the extraction agent (15), the fine grinding being defined in that the food (13) is ground with the extractant (15) until the oil phase (25) has an average particle size of less than 300 µm, preferably less than 100 µm and particularly preferably less than 20 microns, and
wherein the extractant is a vegetable oil,
**characterized in that** the mash (21) is separated in a three-phase separator (23) into a solid phase (29), an oil phase (25) to obtain an essential oil (41) and a water phase (27).

2. The method according to claim 1, **characterized in that** the extraction agent further comprises a salt solution and/or a sugar solution.

3. The method according to any one of claims 1 or 2, comprising adding an additive having an antioxidant effect to the extractant, such as vitamin C, vinegar, oxalic acid or tocopherol.

4. The method according to any one of the preceding claims, **characterized in that** the fine grinding is carried out in a toothed colloid mill (19), the grinding gap of which is preferably less than 0.1 mm.

5. The method according to any one of the preceding claims, **characterized in that** the fine grinding is carried out in two stages.

6. The method according to claim 5, **characterized in that** the first grinding stage is carried out in a perforated disc mill (17) and the second grinding stage is carried out in a toothed colloid mill (19).

7. The method according to any one of the preceding claims, **characterized in that** the fine grinding is carried out at room temperature.

8. The method according to any one of the preceding claims, **characterized in that** the oil phase (25) is degassed and dewatered by a vacuum vent (31).

9. Method according to one of the preceding claims, **characterized in that** the temperature of the mash (21) increases by 10 to 20°C and preferably by 5 to 10°C during the fine grinding.

10. The method according to any one of the preceding claims, **characterized in that** the oil phase (25) is freed from sediments and suspended matter in a 2-phase separator (39).

## Revendications

1. Procédé d'obtention de composants tels que des substances aromatisantes, des vitamines et des polyphénols à partir de produits alimentaires (13), comprenant les étapes ci-dessous consistant à :
a) fournir un produit alimentaire (13) choisi parmi des herbes ou des épices propres à la consommation humaine,
b) ajouter un agent d'extraction,
c) broyer le produit alimentaire (13) et l'agent d'extraction (15) afin d'obtenir une bouillie (21) et
d) séparer en une phase d'extrait qui est une phase huileuse (25), et une phase solide (29) faisant office de phase de raffinat,
dans lequel le produit alimentaire (13) et l'agent d'extraction (15) sont finement broyés, dans lequel le broyage fin est défini par le fait que le produit alimentaire (13) est broyé avec l'agent d'extraction (15) jusqu'à ce que la phase huileuse (25) présente une taille moyenne de particules inférieure à 300 µm, de manière préférée inférieure à 100 µm et de manière particulièrement préférée inférieure à 20 µm et dans lequel l'agent d'extraction est une huile végétale,
**caractérisé en ce que**,
la bouillie (21) est séparée dans un séparateur triphasé (23) en une phase solide (29), une phase huileuse (25) permettant l'obtention d'une huile essentielle (41) et une phase aqueuse (27).

2. Procédé selon la revendication 1, **caractérisé en ce que** l'agent d'extraction comprend en outre une solution saline et/ou une solution sucrée.

3. Procédé selon la revendication 1 ou 2, **caractérisé en ce qu'**un additif présentant une activité antioxydante, par exemple de la vitamine C, du vinaigre, de l'acide oxalique ou du tocophérol est ajouté à l'agent d'extraction.

4. Procédé selon l'une quelconque des revendications précédentes, **caractérisé en ce que** le broyage fin est mis en œuvre dans un broyeur colloïdal à dents (19) dont l'écart de broyage est de manière préférée inférieur à 0,1 mm.

5. Procédé selon l'une quelconque des revendications précédentes, **caractérisé en ce que** le broyage fin est mis en œuvre en deux étapes.

6. Procédé selon la revendication 5, **caractérisé en ce que** la première étape de broyage est mise en œuvre dans un broyeur à plaque perforée (17) et la seconde étape de broyage est mise en œuvre dans un broyeur colloïdal à dents (19).

7. Procédé selon l'une quelconque des revendications précédentes, **caractérisé en ce que** le broyage fin est mis en œuvre à température ambiante.

8. Procédé selon l'une quelconque des revendications précédentes, **caractérisé en ce que** la phase huileuse (25) est dégazée et déshydratée grâce à une purge par le vide (31).

9. Procédé selon l'une quelconque des revendications précédentes, **caractérisé en ce que** la température de la bouillie (21) augmente de 10 à 20°C et de manière préférée de 5 à 10°C pendant le broyage fin.

10. Procédé selon l'une quelconque des revendications précédentes, **caractérisé en ce que** la phase huileuse (25) est débarrassée des sédiments et des matières en suspension dans un séparateur biphasé (39).
